# EUROPÄISCHE PATENTSCHRIFT

(11) **EP 0 993 940 B1**
(45) Veröffentlichungstag und Bekanntmachung des Hinweises auf die Patenterteilung: **01.04.2009**
(21) Anmeldenummer: 99118927.5
(22) Anmeldetag: 25.09.1999
(51) Int. Cl.: B32B 27/08, B65D 65/40

(54) **Schrumpffähige, kaschierte oder beschichtete Folie mit verbesserter Barrierewirkung und daraus hergestellte Schlauchfolie mit Siegelnaht**
Shrinkable, laminated or coated film with improved barrier effectiveness, and a film tube produced therefrom with a welded seam
Feuille thermorétractable revêtue ou laminée ayant des propriétés de barrière améliorées et film tubulaire délivré avec joint soudé

(30) Priorität: 02.10.1998 DE 19845519
(43) Veröffentlichungstag der Anmeldung: 19.04.2000
(73) Patentinhaber: Kalle GmbH, 65203 Wiesbaden (DE)
(72) Erfinder: Grolig, Gerhard, Dr., 64546 Mörfelden-Walldorf (DE); Hiltmann, Klaus, 65203 Wiesbaden (DE); Kummer, Thomas, 65232 Taunusstein (DE)
(74) Vertreter: Plate, Jürgen

(56) Entgegenhaltungen:
- EP-A- 0 792 846
- US-A- 5 346 752

## Beschreibung

Die Erfindung betrifft eine heißschrumpffähige, kaschierte oder beschichtete Kunststoffolie, die ein- oder beidseitig eine heißsiegelfähige Polyethylen-, Polypropylen- oder Ethylen/Propylen-Copolymerschicht sowie eine Schicht aus Polyethylenterephthalat, Polyamid oder Polypropylen aufweist. Sie betrifft daneben einen daraus hergestellten Schlauch, der insbesondere als Nahrungsmittelhülle eingesetzt werden kann.

Mehrlagige, kaschierte Kunststoffolien sind bereits bekannt. Dazu zählt beispielsweise eine Folie, in der jeweils eine Schicht aus Polyethylen (PE) und Polyamid (PA) über eine Schicht aus einem Schmelzkleber auf Basis von Polyurethan oder von Poly(ethylacrylat/methacrylsäureester) miteinander verbunden sind. Weiterhin zählt dazu eine Folie, an deren Oberfläche sich jeweils eine Polyethylenschicht befindet und die eine zentrale Polyamidschicht aufweist. Die einzelnen Schichten sind durch zwei Lagen des genannten Schmelzklebers miteinander verklebt. An die Stelle des Schmelzklebers können auch Lagen aus Ethylen/ Vinylacetat-(EVA)-Copolymeren treten. So gibt es eine symmetrisch aufgebaute, fünfschichtige Hülle mit einer zentralen Schicht aus Polyvinylidenchlorid (PVDC), die auf jeder Seite zunächst eine haftungsvermittelnde EVA-Schicht und dann eine PE-Schicht aufweist.

Aus diesen bekannten Folien lassen sich durch Heißsiegeln Schläuche herstellen. Als künstliche Wursthüllen haben sich diese Schläuche jedoch nicht durchsetzen können, da sie einen nicht ausreichenden Rückschrumpf nach dem Füllen und dem Brühen bzw. Kochen der Wurst, eine unbefriedigende Barrierewirkung für (Luft-)Sauerstoff und Wasserdampf sowie eine schlechte Haftung der Innenschicht am Wurstbrät besitzen. Nach 15 min in 80°C heißem Wasser beträgt der Schrumpf in Längsrichtung bestenfalls 4 % und in Querrichtung bestenfalls 2 %. Das führt dazu, daß sich die Hülle im Verlauf der Wurstherstellung vom Brät löst, d.h. daß die Hülle "abstellt". Die Sauerstoffdurchlässigkeit (nach DIN 53 380) der aus den bekannten kaschierten Mehrschichtfolien hergestellten Schlauchhüllen liegt allgemein bei 27 bis 31 cm³/m² d bar oder noch darüber. Die Wasserdampfdurchlässigkeit (nach DIN 53 122) ist 2 bis 3 g/m² d oder schlechter.

Wursthüllen, die sich aus Flachfolie herstellen lassen, sind jedoch nach wie vor besonders attraktiv. Denn sie können unmittelbar vor dem Füllen hergestellt werden (beispielsweise mit Hilfe einer Formschulter und eines Siegelwerkzeugs), wodurch das Raffen der Hülle überflüssig wird. Vorgefertigte Wursthüllen werden dagegen üblicherweise in Form von sogenannten "Raffraupen" geliefert, die dann auf das Füllrohr geschoben werden; beim Füllen wird die Hülle dann wieder "entrafft". Durch das abschnittsweise Raffen der Hülle entstehen zusätzliche Kosten. Eine Raffraupe umfaßt zudem, je nach Kaliber, nicht mehr als 30 bis 70 m Wursthülle. Eine Flachfolie kann dagegen in erheblich größerer Länge aufgewickelt zur Verfügung gestellt werden. Damit können entsprechend längere Abschnitte hergestellt und gefüllt werden, was zu ökonomischen Vorteilen führt. Flachfolie ist außerdem kostengünstiger in der Herstellung als Schlauchfolie.

Es bestand daher die Aufgabe, eine Flachfolie zu schaffen, die die oben beschriebenen Nachteile nicht mehr aufweist und sich auf einfache Weise zu einer schlauchförmigen Hülle verarbeiten läßt. Die Hülle soll die für Wursthüllen geforderten Eigenschaften aufweisen, d.h. flexibel und ausreichend schrumpffähig sein, damit die Hülle jederzeit straff am Wurstbrät anliegt, und gleichzeitig eine hohe Sauerstoff- und Wasserdampfbarriere besitzen. Sie soll schließlich auch ein Entweichen der Aromastoffe aus dem Wurstbrät sicher verhindern.

Erforderlich ist schließlich auch eine gute Kaliberkonstanz, damit sich Würste mit gleichmäßigem Durchmesser herstellen lassen.

Gelöst wird die Aufgabe durch eine mehrschichtige Folie, in der zwischen den einzelnen Schichten Siliciumoxid enthaltende Schichten angeordnet sind. Die Schichten mit bzw. aus Siliciumoxid wirken als Barriereschichten für Sauerstoff und Wasserdampf, und zwar überraschenderweise sogar wesentlich besser als gleich dicke Schichten aus organischen Polymeren, wie Polyethylenterephthalat (PET).

EP792846 offenbart Verbundmaterialien mit einem Trägermaterial, auf das mindestens 2 Schichten aufgebracht sind, von denen mindestens eine eine ORMOCER enthaltende Barriereschicht ist, gibt jedoch keine Hinweise auf schrumpfbare Schlauchfolien.

Gegenstand der vorliegenden Anmeldung ist somit eine heißschrumpffähige, kaschierte oder beschichtete Kunststoffolie, die ein- oder beidseitig eine heißsiegelfähige Polyethylen-, Polypropylen- oder Ethylen/Propylen-Copolymerschicht sowie eine Schicht aus Polyethylenterephthalat, Polyamid oder Polypropylen besitzt und dadurch gekennzeichnet ist, daß sie mindestens eine Schicht aus einem anorganisch-organischen Hybridpolymer oder eine SiOₓ-Schicht aufweist. Beide Arten von Schichten enthalten Silicium - wobei die Siliciumatome an Sauer stoffatome gebunden sind - und wirken als Barriere für (Luft-)Sauerstoff und Wasserdampf Das anorganisch-organischen Hybridpolymer wirkt dabei gleichzeitig als Kaschierkleber. Die Dicke der Hybridpolymerschicht beträgt 0,5 bis 10 µm, bevorzugt 2 bis 7 µm, besonders bevorzugt etwa 5 µm. Ist anstelle der Schicht aus dem anorganisch-organischen Hybridpolymer eine SiOₓ-Schicht vorhanden, so wird die Haftung durch eine Schicht aus einem konventionellen Kaschierkleber, vorzugsweise auf der Basis von Polyurethan oder Ethylacrylat/Methacrylsäureester-Copolymeren, hergestellt. Wird eine besonders hohe Barrierewirkung gewünscht, dann ist es natürlich auch möglich, eine Schicht aus dem anorganisch-organischen Hybridpolymer unmittelbar auf die SiOₓ-Schicht folgen zu lassen. Die SiOₓ-Schicht befindet sich bevorzugt in direktem Kontakt mit der PET-, PA- oder PP-Schicht, kann jedoch auch auf der der Kaschierkleberschicht zugewandten Seite der inneren oder äußeren Schicht aufgebracht sein. Sie wird allgemein durch Aufdampfen oder ein ähnliches Verfahren hergestellt und ist damit wesentlich dünner als die Schicht aus dem anorganisch-organischen Hybridpolymer. Die Dicke der SiOₓ-Schicht beträgt allgemein 10 bis 80 nm, bevorzugt 20 bis 50 nm. Aus dem Vorgehenden wird deutlich, daß die erfindungsgemäße Folie auch mehrere Schichten aus dem anorganisch-organischen Hybridpolymer und/oder mehrere SiOₓ-Schichten aufweisen kann. Vorzugsweise beträgt die Gesamtzahl der Hybridpolymer- und SiliciumoxidSchichten jedoch nicht mehr als 3.

Die Dicke der (Co-)Polymerschicht auf der Innen- bzw. Außenseite der Folie beträgt demgegenüber 5 bis 30 µm, bevorzugt 6 bis 15 µm. Bei den nur einseitig siegelfähigen Folien besteht die nicht siegelfähige Seite vorzugsweise aus einer Polyamidschicht, hergestellt insbesondere aus einem Polyamid wie er auch für die nicht siegelfähige Schicht genannt ist. Besonders bevorzugt ist eine kaschierte Folie mit einem symmetrischen Aufbau, die jeweils eine Klebstoff schicht auf der Basis von anorganisch-organischen Hybridpolymeren zwischen der nicht siegelfähigen Schicht und der inneren bzw. der äußeren Polyolefinschicht aufweist. Bevorzugt sind ferner Folien mit heißsiegelfähigen Polymer schichten auf der Innen- und auf der Außenseite. Diese Ausführungsform bietet auch beim Heißsiegeln Vorteile (in den überlappenden Bereichen kann Innenseite auf Außenseite gesiegelt werden). Ebenso bevorzugt ist eine symmetrisch aufgebaute Folie, bei der die nicht siegelfähige Schicht auf beiden Seiten mit einer SiOₓ-Schicht versehen ist, gefolgt von einer Schicht aus einem konventionellen Kaschierkleber. Die SiOₓ -Schicht wird vorzugsweise durch Bedampfen oder Plasmabeschichten aufgebracht. SiOₓ-Schichten und Ormocer-Kleberschichten können auch gleichzeitig vorhanden sein. Dadurch wird eine besonders hohe Barrierewirkung erreicht.

Geeignete anorganisch-organische Hybridpolymere sind unter der Bezeichnung Ormocer (organically modified ceramics) bekannt und beispielsweise in der EP-A 580 487 beschrieben. Sie entsprechen im allgemeinen der Summenformel CₙHₘOₓSi_{y}Me_{z}, wobei Me für ein Metall der III. oder IV. Hauptgruppe bzw. der III., IV., V. oder VI. Nebengruppe des Periodensystems steht. Bevorzugt sind Aluminium, Silicium, Titan, Zirkonium, Hafnium, Tantal oder Wolfram. n steht allgemein für eine Zahl von 4 bis 48, m für eine Zahl von 5 bis 52, x für eine Zahl von 5 bis 48, y für eine Zahl von 2 bis 16, während z = 1 ist. Das Verhältnis von n : (y + z), d.h. das Verhältnis von Kohlenstoff : (Silicium + Metall), beträgt allgemein weniger als 7, bevorzugt weniger als 5. Ormocere werden bevorzugt nach dem Sol-Gel-Verfahren hergestellt. In diesem Verfahren wird zunächst durch kontrollierte Hydrolyse und Kondensation von Organo-alkoxysilanen, gegebenenfalls unter Zusatz von Metall-alkoholaten (wie Titan-tetraalkoholat, speziell Titan-tetrabutylat) und/oder Tetraalkoxysilanen, ein Sol hergestellt, das dann durch thermisch oder UV-induzierte Polymerisation in das anorganisch-organische Hybridpolymer umgewandelt wird. Die anorganisch-organischen Hybridpolymere werden allgemein mit Hilfe eines organischen Lösemittels aufgetragen. Als Lösemittel kommen insbesondere in Frage: Etylacetat, Ethyllactat und andere lebensmittelrechtlich unbedenkliche.

Die siegelfähigen Schichten aus Polyethylen und/oder Polypropylen oder Ethylen/Propylen-copolymeren auf der äußeren und inneren Oberfläche bestehen bevorzugt aus einem Polyethylen oder Polypropylen. Besonders bevorzugt ist Polyethylen niederer Dichte (LDPE), lineares Polyethylen niederer Dichte (LLDPE) oder Polyethylen hoher Dichte (HDPE) oder Mischungen davon. Als besonders günstig haben sich Polyethylene erwiesen, die unter Verwendung von Metallocen-Katalysatoren hergestellt wurden. Innere und äußere Schicht werden vor dem Kaschieren biaxial verstreckt, und zwar in einem Flächenstreckverhältnis von 1 : 2 bis 1 : 20, bevorzugt von 1 : 5 bis 1 : 10. Innere und äußere Schichten können aus verschiedenem Material bestehen.

Die nicht siegelfähigen Schichten bestehen bevorzugt aus Polyamid-6, Polyhexamethylenadipamid (= Polyamid-66), Polyamid-11, Polyamid-12 oder Polyethylenterephthalat. Sie sind ebenfalls biaxial verstreckt und sollen im wesentlichen die gleichen Schrumpfeigenschaften besitzen wie die außen liegenden Schichten, damit keine Delamination oder Verformung beim Schrumpfen eintritt. Die Hauptfunktion der nicht siegelfähigen Schicht besteht darin, der Folie die erforderliche mechanische Festigkeit zu verleihen. Eine Schicht aus biaxial orientiertem Polypropylen (BOPP) ist daher ebenfalls geeignet. In einer bevorzugten Ausführungsform ist die nicht siegelfähige Schicht ein- oder beidseitig mit SiOₓ vakuumbedampft. Die SiOₓ-Beschichtung kann auch durch Plasmapolymerisation hergestellt werden. Durch diese Beschichtung lassen sich die Barriereeigenschaften der Mehrschichtfolie deutlich verbessern. Die nicht siegelfähige Schicht kann auch Pigmente - z.B. TiO₂-Partikel oder andere Farbpigmente - in einer Menge enthalten, die ausreicht um eine effektive Einfärbung zu bewirken. Die nicht siegelfähige Schicht kann ihrerseits einen mehrschichtigen Aufbau haben.

Weitere Schichten können in der erfindungsgemäßen Folie vorhanden sein, bringen in der Regel jedoch keinen besonderen Vorteil, sondern nur höhere Kosten. Weiterhin ist es möglich, daß SiOₓ-Beschichtung und Ormocer-Haftschicht gleichzeitig vorhanden sind. Das bedeutet beispielsweise, daß die nicht siegelfähige Schicht auf der einen Seite mit SiOₓ bedampft ist, während sie auf der anderen Seite eine Ormocer-Kleberschicht trägt.

Kaschierverfahren zur Herstellung der erfindungsgemäßen Mehrschichtfolie sind dem Fachmann an sich bekannt. Besonders bevorzugt sind Dublierverfahren.

Die erfindungsgemäße Folie weist einen Schrumpf von 5 bis 15%, bevorzugt etwa 10 %, jeweils in Längs- und Querrichtung auf (nach 15 min Lagerung in 80 °C heißem Wasser). Damit ist ein pralles, formschönes Aussehen der Wurst sichergestellt. Die Sauerstoffdurchlässigkeit (DIN 53 380) liegt bei 10 cm³/m² d bar oder weniger, die Wasserdampfdurchlässigkeit bei 1 g/m² d oder weniger. Um die Folie bedruckbar zu machen, sollte die Oberflächenspannung bei 40 dyn oder mehr liegen. Eine solche Oberflächenspannung kann durch Coronabehandlung der äußeren Schicht (z.B. einer Polyethylenschicht) vor dem Kaschieren erreicht werden. Vor oder auch nach dem Kaschieren können die einzelnen Schichten ein- oder mehrfarbig bedruckt werden. Dazu eignen sich besonders Kupfertiefdruck-, Flexodruck- oder Revoprint-Verfahren.

Zur Herstellung einer Schlauchfolie wird die erfindungsgemäße Mehrschichtfolie in Streifen geschnitten, die dann mit Hilfe einer sogenannten "Formschulter" zu einem Schlauch mit überlappenden Längsrändern geformt werden. Durch Einwirkung von Druck und Hitze auf die Folie in einem Siegelwerkzeug werden dann die Ränder fest miteinander verbunden. Herstellung und Weiterverarbeitung der Schlauchfolie (z.B. Füllen mit Wurstbrät und Portionieren) können unmittelbar aufeinander folgen und auch in einer einzigen Vorrichtung, beispielsweise in einem sogenannten Transfer-Siegel-Automaten, kombiniert werden. Das Raffen der fertigen Hülle ist dann überflüssig.

Aufgrund der ausgezeichneten Barriereeigenschaften ist die erfindungsgemäße Schlauchfolie besonders geeignet als Nahrungsmittelhülle, insbesondere als künstliche Wursthülle. Die Wursthülle ist mit besonderem Vorteil einsetzbar bei Wurstsorten, die sich unter Lufteinwirkung leicht verfärben, wie Leberwurst. Ansonsten eignen sie sich besonders zur Herstellung von Brühwurst und Tiernahrung (pet-food). Sie sind je nach Verwendungszweck transparent, eingefärbt und/oder bedruckt. Die Druckfarbe wird bevorzugt in die Zwischenlage eingebracht, damit sie nicht mit dem Füllgut in Berührung kommt und auch einer Einwirkung von außen entzogen ist. Hüllen für Tiernahrung sind dagegen in der Regel eingefärbt. Durch die besonders guten Barriereeigenschaften der Hülle lassen sich die Brühwürste bis zu 3 Monaten, die Tiernahrung sogar bis zu 12 Monaten, lagern.

### Beispiel

a) Auf eine Folie aus einer Mischung von LDPE und LLDPE mit einer Dicke von 20 µm wurde über ein Antragswerk ein lösemittelhaltiger, angewärmter Kaschierkleber (Ormocer) in Form einer dünnen Schicht aufgebracht und getrocknet. Eine hochschrumpfende Polyamid 66-Folie wurde dann auf diese Kleberschicht laminiert. Die Kleberschicht hatte nach dem Trocknen ein Flächengewicht von etwa 2,5 g/m².
b) Auf die PA-Schicht dieses Verbundes wurde wie unter a) beschrieben eine weitere Ormocer-Schicht mit praktisch dem gleichen Flächengewicht aufgebracht Auf diese Kleberschicht wurde wiederum eine Folie aus einer Mischung von LDPE und LLDPE laminiert.

Die so hergestellte mehrschichtige Folie zeigte nach 15 min Lagerung in Wasser von 80 °C einen Schrumpf von etwa 10 % in Längs- und Querrichtung. Die Sauerstoffdurchlässigkeit gemäß DIN 53380 lag bei etwa 10 cm³/m² d bar, die Wasserdampfdurchlässigkeit gemäß DIN 53122 bei etwa 1,0 g pro Quadratmeter und Tag.

Diese Folie wurde auf einem Transfer-Siegel-Automaten in-line zu einem Schlauch geformt, die überlappenden Ränder gesiegelt, der so hergestellte Schlauch mit Leberwurst-Brät gefüllt und die Wurstenden abgeclippt.

Nach dem Brühen zeigte die abgekühlte Wurst ein pralles, formschönes Aussehen. Auch nach 4 Wochen Lagerung unter Kühlhausbedingungen (8 °C, 76 % relative Feuchte) konnte an der Wurst weder farbliche noch geschmackliche Veränderungen festgestellt werden.

## Patentansprüche

1. Verwendung einer heißschrumpffähigen, kaschierten oder beschichteten Kunststoff-Flachfolie, die ein- oder beidseitig eine biaxial verstreckte, heißsiegelfähige Polyethylen-, Polypropylen-, Ethylen/Propylen-Copolymerschicht, eine biaxial verstreckte Schicht aus Polyethylenterephthalat, Polyamid oder Polypropylen und mindestens eine Schicht aus einem anorganisch-organischen Hybridpolymer und/oder eine SiOₓ-Schichtumfaßt und in Längsund Querrichtung einen Schrumpf von 5 bis 15 % aufweist, gemessen nach 15 min Lagerung in 80 °C heißem Wasser, zur Herstellung einer Schlauchfolie mit Siegelnaht.

2. Verwendung gemäß Anspruch 1, **dadurch gekennzeichnet, daß** die Dicke der Hybridpolymerschicht 0,5 bis 10 µm, bevorzugt 2 bis 7 µm, besonders bevorzugt etwa 5 µm, beträgt.

3. Verwendung gemäß Anspruch 1 oder 2, **dadurch gekennzeichnet, daß** die Dicke der SiOₓ-Schicht 10 bis 80 nm, bevorzugt 20 bis 50 nm, beträgt.

4. Verwendung gemäß einem oder mehreren der Ansprüche 1 bis 3, **dadurch gekennzeichnet, daß** sich die SiOₓ-Schicht in direktem Kontakt mit der Schicht aus Polyethylenterephthalat, Polyamid oder Polypropylen befindet.

5. Verwendung gemäß Anspruch 1, **dadurch gekennzeichnet, daß** das anorganisch-organische Hybridpolymer der Summenformel CₙHₘOₓSi_{y}Me_{z} entspricht, wobei Me für ein Metall der III. Nebengruppe, der IV. Haupt- oder Nebengruppe oder der V. oder VI. Nebengruppe des Periodensystems steht, n für eine Zahl von 4 bis 48, m für eine Zahl von 5 bis 52, x für eine Zahl von 5 bis 48 und y für eine Zahl von 2 bis 16 steht, und z = 1 ist, mit der Maßgabe, daß das Verhältnis von m : (y + z) weniger als 7, bevorzugt weniger als 5, beträgt.

6. Verwendung gemäß einem oder mehreren der Ansprüche 1 bis 5, **dadurch gekennzeichnet, daß** die innere und die äußere Schicht vor dem Kaschieren in einem Flächenstreckverhältnis von 1 : 2 bis 1 : 20, bevorzugt von 1 : 5 bis 1 : 10, biaxial verstreckt wurden.

7. Verwendung gemäß einem oder mehreren der Ansprüche 1 bis 6, **dadurch gekennzeichnet, daß** die Polyamidschicht aus Polyamid-6, Polyamid-66, Polyamid-11 oder Polyamid-12, besteht.

8. Verwendung gemäß einem oder mehreren der Ansprüche 1 bis 7, **dadurch gekennzeichnet, daß** die Folie einen Schrumpf von etwa 10 % jeweils in Längs- und Querrichtung aufweist, gemessen nach 15 min Lagerung in 80 °C heißem Wasser.

9. Schlauchfolie mit Siegelnaht, **dadurch gekennzeichnet, daß** sie aus einer heißschrumpffähigen, kaschierten oder beschichteten Kunststoff-Flachfolie herstellbar ist, die ein- oder beidseitig eine biaxial verstreckte, heißsiegelfähige Polyethylen-, Polypropylen-, Ethylen/Propylen-Copolymerschicht, eine biaxial verstreckte Schicht aus Polyethylenterephthalat, Polyamid oder Polypropylen und mindestens eine Schicht aus einem anorganisch-organischen Hybridpolymer oder eine SiOₓ-Schicht umfaßt und in Längs- und Querrichtung einen Schrumpf von 5 bis 15 % aufweist, gemessen nach 15 min Lagerung in 80°C heißem Wasser.

10. Verwendung der Schlauchfolie gemäß Anspruch 9 als Nahrungsmittelhülle, bevorzugt als künstliche Wursthülle oder als Umhüllung für Tiernahrung.

## Claims

1. The use of a flat, heat-shrinkable, laminated or coated plastic film which comprises, on one or both sides, a biaxially oriented heat-sealable polyethylene, polypropylene, ethylene-propylene copolymer layer, and a biaxially oriented layer of polyethylene terephthalate, polyamide or polypropylene, and comprises at least one layer of an inorganic-organic hybrid polymer, and/or comprises an SiOₓ layer, and in longitudinal and transverse directions has a shrinkage of from 5 to 15%, measured after storage for 15 minutes in water at 80°C, for producing a film tube with a welded seam.

2. The use as claimed in claim 1, wherein the thickness of the hybrid polymer layer is from 0.5 to 10 µm, preferably from 2 to 7 µm, particularly preferably about 5 µm.

3. The use as claimed in claim 1 or 2, wherein the thickness of the SiOₓ layer is from 10 to 80 nm, preferably from 20 to 50 nm.

4. The use as claimed in one or more of claims 1 to 3, wherein the SiOₓ layer is in direct contact with the layer of polyethylene terephthalate, polyamide or polypropylene.

5. The use as claimed in claim 1, wherein the inorganic-organic hybrid polymer has the empirical formula CₙHₘOₓSi_{y}Me_{z}, where Me is a metal of the 3rd transition group, of the 4th main group or transition group, or of the 5th or 6th transition group of the Periodic Table, n is a number from 4 to 48, m is a number from 5 to 52, x is a number from 5 to 48 and y is a number from 2 to 16, and z is 1, with the proviso that the ratio m: (y+z) is less than 7, preferably less than 5.

6. The use as claimed in one or more of claims 1 to 5, wherein the inward-facing and the outward-facing layers were biaxially oriented prior to lamination with an area stretching ratio of from 1:2 to 1:20, preferably from 1:5 to 1:10.

7. The use as claimed in one or more of claims 1 to 6, wherein the polyamide layer is composed of nylon-6, nylon-6,6, nylon-11, or nylon-12.

8. The use as claimed in one or more of claims 1 to 7, wherein the film has a shrinkage of about 10% in both longitudinal and transverse directions, measured after storage for 15 min in water at 80°C.

9. A film tube with a welded seam, wherein the film tube can be produced from a heat-shrinkable, laminated or coated plastic film which comprises, on one or both sides, a biaxially oriented heat-sealable polyethylene, polypropylene, ethylene-propylene copolymer layer, and a biaxially oriented layer of polyethylene terephthalate, polyamide or polypropylene, and comprises at least one layer of an inorganic-organic hybrid polymer or comprises an SiOₓ layer and in longitudinal and transverse directions has a shrinkage of from 5 to 15%, measured after storage for 15 minutes in water at 80°C.

10. The use of the film tube as claimed in claim 9 as a casing for foods, preferably as a synthetic sausage-casing or as a casing for animal feed.

## Revendications

1. Utilisation d'un film de plastique plat thermorétractable, contrecollé ou revêtu, qui comprend sur l'une ou sur les deux faces une couche de polyéthylène, de polypropylène, d'un copolymère d'éthylène et de propylène, étirée bi-axialement, pouvant être soudée à chaud, une couche étirée bi-axialement de poly(téréphtalate d'éthylène), de polyamide ou de polypropylène et au moins une couche en un polymère hybride inorganique/organique et/ou une couche de SiOₓ et présente dans les directions longitudinale et transversale une rétraction de 5 à 15 %, mesurée après un entreposage de 15 min dans de l'eau chaude à 80 °C, à la fabrication d'un film tubulaire avec ligne de soudure.

2. Utilisation selon la revendication 1, **caractérisée en ce que** l'épaisseur de la couche de polymère hybride est de 0,5 à 10 µm, de préférence de 2 à 7 µm, de façon particulièrement préférée d'environ 5 µm.

3. Utilisation selon la revendication 1 ou 2, **caractérisée en ce que** l'épaisseur de la couche de SiOₓ est de 10 à 80 nm, de préférence de 20 à 50 nm.

4. Utilisation selon une ou plusieurs des revendications 1 à 3, **caractérisée en ce que** la couche de SiOₓ se trouve en contact direct avec la couche de poly(téréphtalate d'éthylène), de polyamide ou de polypropylène.

5. Utilisation selon la revendication 1, **caractérisée en ce que** le polymère hybride inorganique/organique correspond à la formule brute CₙHₘOₓSiyMe_{z}, dans laquelle Me représente un métal du III^{e} sous-groupe, du IV^{e} groupe principal ou sous-groupe ou des V^{e} ou VI^{e} sous-groupes du système périodique, n un nombre de 4 à 48, m un nombre de 5 à 52, x un nombre de 5 à 48 et y un nombre de 2 à 16, et dans laquelle z = 1, avec la spécification que le rapport de m : (y + z) est inférieur à 7, de préférence inférieur à 5.

6. Utilisation selon l'une ou plusieurs des revendications 1 à 5, **caractérisée en ce que** les couches intérieure et extérieure ont été étirées bi-axialement avant le contre-collage dans un rapport d'étirement surfacique de 1 : 2 à 1 : 20, de préférence de 1 : 5 à 1 : 10.

7. Utilisation selon l'une ou plusieurs des revendications 1 à 6, **caractérisée en ce que** la couche de polyamide consiste en polyamide 6, en polyamide 66, en polyamide 11 ou en polyamide 12.

8. Utilisation selon l'une ou plusieurs des revendications 1 à 7, **caractérisée en ce que** le film présente une contraction d'environ 10 % respectivement dans les directions longitudinale et transversale, mesurée après un entreposage de 15 min dans de l'eau chaude à 80 °C.

9. Film tubulaire avec ligne de soudure, **caractérisé en ce qu'**il peut être fabriqué à partir d'un film de plastique plat thermorétractable, contrecollé ou revêtu, qui comprend sur l'une ou sur les deux faces une couche de polyéthylène, de polypropylène, d'un copolymère d'éthylène et de propylène, étirée bi-axialement, pouvant être soudée à chaud, une couche étirée bi-axialement de poly(téréphtalate d'éthylène), de polyamide ou de polypropylène et au moins une couche en un polymère hybride inorganique/organique ou une couche de SiOₓ, et qu'il présente dans les directions longitudinale et transversale une rétraction de 5 à 15 %, mesurée après un entreposage de 15 min dans de l'eau chaude à 80 °C.

10. Utilisation du film tubulaire selon la revendication 9 comme enveloppe de denrée alimentaire, de préférence comme enveloppe de saucisse ou comme enveloppe pour des aliments pour animaux.
